# EUROPÄISCHE PATENTSCHRIFT

(11) **EP 1 082 206 B1**
(45) Veröffentlichungstag und Bekanntmachung des Hinweises auf die Patenterteilung: **13.03.2002**
(21) Anmeldenummer: 00907484.0
(22) Anmeldetag: 28.01.2000
(51) Int. Cl.: B29C 70/32

(54) **BESCHICKUNGSARM**
CHARGING ARM
BRAS DE CHARGEMENT

(30) Priorität: 19.03.1999 DE 19912297
(43) Veröffentlichungstag der Anmeldung: 14.03.2001
(73) Patentinhaber: Hobas Engineering GmbH, 9020 Klagenfurt (AT)
(72) Erfinder: KNAUDER, Josef, A-9500 Villach (AT)
(74) Vertreter: Becker, Thomas, Dr., Dipl.-Ing.
(86) Internationale Anmeldenummer: EP0000649
(87) Internationale Veröffentlichungsnummer: WO0056525

(56) Entgegenhaltungen:
- PATENT ABSTRACTS OF JAPAN vol. 008, no. 186 (M-320), 25. August 1984 (1984-08-25) & JP 59 076224 A (HITACHI KASEI KOGYO KK;OTHERS: 01), 1. Mai 1984 (1984-05-01)
- PATENT ABSTRACTS OF JAPAN vol. 006, no. 163 (M-152), 26. August 1982 (1982-08-26) & JP 57 077531 A (HITACHI ZOSEN CORP), 14. Mai 1982 (1982-05-14)

## Beschreibung

Die Erfindung betrifft einen Beschickungsarm zur Förderung, Aufbereitung und Ausgabe verschiedener Ausgangsmaterialien zur Herstellung von glasfaserarmierten Kunststoffrohren.

Ein solcher Beschickungsarm umfaßt üblicherweise an einem Ende eine Art Füllstation, in der die verschiedenen Ausgangsmaterialien, insbesondere Glasfasern, Sand, Harz, Katalysator sowie gegebenenfalls weitere Füllstoffe und Zusatzmittel zugeführt werden. Der Transport dieser Ausgangsmaterialien erfolgt durch Rohrleitungen unterschiedlicher Durchmesser entlang des Beschickungsarms zum sogenannten Kopf des Beschickungsarms am anderen Ende. Dort werden die endlos antransportierten Glasfasern (Glasfaserstränge, Glasfasergarne) auf die jeweils gewünschte Länge mit Hilfe einer Schneideinrichtung geschnitten, mit den weiteren Ausgangsmaterialien gemischt und radial ausgetragen (abgeschleudert), von wo sie in eine trommelförmige rotierende Matrize geschleudert werden. Der Beschickungsarm fährt dabei alternierend in Axialrichtung der Matrize hin und her. Auf diese Weise wird eine Rohrleitung mit gewünschtem Durchmesser und gewünschter Wandstärke kontinuierlich aufgebaut.

Anschließend wird der Beschickungsarm aus der Matrize herausgezogen und in eine neue, freie Matrize eingeführt, während das zuvor hergestellte Rohr, beispielsweise ein Abwasserrohr, in der Matrize aushärtet und anschließend aus der Matrize entnommen wird.

Ein solches Verfahren ist als HOBAS-Verfahren zur Herstellung geschleuderter GFK-Rohre bekannt.

Dabei besteht die Schneideinrichtung aus drei achsparallel zueinander angeordneten Walzen. Eine erste und eine zweite Walze dienen als Förderwalzen. Sie besitzen beide eine glatte Oberfläche, rotieren in entgegengesetzter Richtung und ihre Oberflächen rollen aufeinander ab, wobei sie gleichzeitig die zwischen den Walzenoberflächen hindurchgeführten Glasfaserstränge weitertransportieren.

Hinter der ersten und zweiten Walze ist eine dritte Walze, eine sogenannte Messerwalze, angeordnet. Diese Walze weist auf ihrer Oberfläche eine Vielzahl von Messern auf, die im Abstand zueinander in Axialrichtung der Walze angeordnet sind. Die Messerwalze rotiert entgegen der Richtung der zweiten Walze, wobei die Messer auf der Oberfläche der zweiten Walze abrollen (diese berühren).

Die mit Hilfe der ersten und zweiten Walze (Förderwalzen) transportierten Glasfaserstränge werden anschließend zwischen der zweiten und dritten Walze hindurchgeführt und entsprechend dem Abstand der Messer auf der Messerwalze auf eine korrespondierende Länge geschnitten.

Die geschnittenen Glasfasern werden anschließend mit den weiteren Ausgangsmaterialien vermischt und auf die beschriebene Art und Weise aus dem Beschickungsarm ausgetragen.

Ein Beschickungsarm mit der zuvor beschriebenen Schneideinrichtung hat sich grundsätzlich bewährt. Es hat sich aber auch herausgestellt, daß insbesondere die Messerwalze und insbesondere bei kontinuierlichem Betrieb sich auf Temperaturen zwischen 50 und 60°C erwärmen kann. Aufgrund dieser Erwärmung kommt es zu einem erhöhten Messerverschleiß. Darüber hinaus wurde beobachtet, daß sich auf den Oberflächen der Förderwalzen Chemikalien ablagern, mit denen die Glasfasern zur besseren Haftung im Matrixmaterial der herzustellenden Rohrleitung beschichtet sind. Dies wiederum kann zu einem erhöhten Abrieb der Oberflächen der Förderwalzen führen und im weiteren zu einer schlechteren Haftung der Fasern.

Der Erfindung liegt die Aufgabe zugrunde, einen Beschickungsarm der vorgenannten Art zur Verfügung zu stellen, bei dem die beschriebene Temperaturerhöhung im Bereich der Schneideinrichtung zumindest reduziert ist, um die beschriebenen Nachteile zu vermeiden.

Ein Möglichkeit dazu wäre der Austausch der überwiegend metallischen Walzen gegen solche aus Kunststoff oder Hartholz, die eine deutlich geringere Wärmeleitfähigkeit besitzen. Diese Walzen besitzen jedoch eine deutlich reduzierte mechanische Festigkeit und müßten entsprechend häufiger ausgetauscht werden. Damit wären unerwünschte Stillstandszeiten der Produktionsanlage verbunden.

Eine andere Möglichkeit wäre die Kühlung der Walzen mittels Kühlluft. Auch dies hat jedoch verschiedene Nachteile: Kühlluft müßte separat zugeführt werden. Insoweit wäre eine zusätzliche Kühlluftleitung entlang des Beschickungsarms notwendig. Aufgrund der Vielzahl der Förderleitungen im Beschickungsarm für die zahlreichen Ausgangsmaterialien ergibt sich dabei schon ein räumliches Problem, eine weitere Förderleitung anzuordnen. Darüber hinaus müßte die Kühlluft über den gesamten Bereich der Walzenoberflächen verteilt werden. Auch dies bereitet erhebliche Platzprobleme. Schließlich müßte die Kühlluft mit entsprechender Strömungsgeschwindigkeit auf die Walzen geblasen werden, wodurch die Führung der Glasfaserstränge und geschnittenen Glasfasern im Bereich der Schneideinrichtung unkontrollierbar würde.

In umfangreichen Vorversuchen wurden verschiedenste konstruktive Abwandlungen getestet. Im Ergebnis hat sich ein völlig anderer Lösungsweg als vorteilhaft herausgestellt:

Das gewünschte Ziel kann dadurch erreicht werden, wenn die vorgenannte erste Walze (also die Walze, die nicht mit der Schneidwalze in Kontakt steht) mit einer profilierten Oberfläche ausgebildet wird.

Aufgrund der Profilierung der Oberfläche der ersten Walze ergibt sich zum einen ein geringerer Flächenkontakt zwischen der ersten und der zweiten Förderwalze. Auf diese Weise kann beim Transport der Glasfaserstränge zwischen den Walzen zusätzlich Luft mitgeführt werden, die einen Kühleffekt, insbesondere auch in Richtung auf die dahinterliegende dritte Walze, bewirkt. Dieser Effekt wird unterstützt durch die Rotationsbewegung der ersten Walze, die damit nach Art eines Ventilators wirkt.

Demzufolge betrifft die Erfindung in ihrer allgemeinsten Ausführungsform einen Beschickungsarm zur Förderung, Aufbereitung und Ausgabe verschiedener Ausgangsmaterialien zur Herstellung von glasfaserarmierten Kunststoffrohren mit folgenden Merkmalen:
- einer am ausgabeseitigen Ende angeordneten Schneideinrichtung zur Zerschneiden von Glasfasergarnen auf eine vorgegebene Länge,
- dabei weist die Schneideinrichtung mindestens drei, achsparallel zueinander angeordnete Walzen auf,
- die erste Walze ist mit einer profilierten Oberfläche ausgebildet und so angeordnet, daß sie mit ihrer Oberfläche auf einer zweiten, entgegen der ersten Walze umlaufenden Walze abrollt,
- eine dritte Walze weist auf ihrer Oberfläche eine Vielzahl beabstandet in Axialrichtung der Walze verlaufende Messer auf und ist so angeordnet, daß sie mit ihrer Oberfläche auf der zweiten, entgegen der dritten Walze umlaufenden Walze abrollt.

Nach einer Ausführungsform soll die zweite Walze der Schneideinrichtung eine reversibel verformbare Oberfläche aufweisen. Auf diese Weise kann der "Anpreßdruck" der ersten Walze gegenüber der zweiten Walze erhöht werden mit dem Vorteil einer gezielten Durchführung der Glasfaserstränge. "Reversibel verformbare Oberfläche" bedeutet dabei, daß sich die profilierte Oberfläche der ersten Walze geringfügig in die Oberfläche der zweiten Walze hineindrücken kann und sich die Oberfläche anschließend wieder zurückverformt, sobald der entsprechende Profilteil der Walze keinen Kontakt mehr zur Oberfläche der zweiten Walze hat.

Dabei kann die zweite Walze ganz oder oberflächlich aus einem entsprechenden Werkstoff, beispielsweise auf Kunststoff- oder Kautschukbasis bestehen.

Die Profilierung der ersten Walze besteht nach einer weiteren Ausführungsform aus Rippen, die in Axialrichtung der Walze verlaufen. Auf diese Weise erhält die Walze ein "Wellenprofil" auf ihrer Oberfläche. Gerade bei dieser Ausführungsform wird der vorbeschriebene "Ventilatoreffekt", der mit der Walze erzielbar ist, besonders deutlich.

Dabei genügt es, die Rippen mit einer relativ geringen Höhe auszubilden, beispielsweise 1 bis 5 mm. Auch der Abstand der Rippen zueinander kann sich in dieser Größenordnung bewegen.

Die erste Walze kann einen kleineren Durchmesser als die zweite und dritte Walze aufweisen. Hieraus folgt eine höhere Umdrehungsgeschwindigkeit gegenüber der zweiten Walze. Die höhere Umdrehungsgeschwindigkeit führt zu einer Intensivierung des beschriebenen Kühleffektes, wobei die Luft in Transportrichtung der Glasfaserstränge in Richtung auf die dritte Walze geleitet wird.

Der beschriebene Kühleffekt führt weiter dazu, daß die beschriebene Ablagerung von Zusatzstoffen (Beschichtungsstoffen) der Glasfaserstränge deutlich reduziert wird oder ganz vermieden werden kann. Hierzu trägt auch der aufgrund der Profilierung der ersten Walze reduzierte Oberflächenkontakt zwischen der ersten und zweiten Walze bei.

Obwohl sich durch die beschriebene Kühlung der Verschleiß der Messer der dritten Walze ebenfalls deutlich reduzieren läßt unterliegen diese selbstverständlich nach wie vor einem gewissen Verschleiß.

Nach einer Ausführungsform ist deshalb vorgesehen, die Messer der dritten Walze auswechselbar im Körper der Walze zu verankern.

Schließlich sieht die Erfindung vor, die erste Walze und/oder die zweite Walze federnd zu lagern, wodurch sich der Anpreßdruck gegenüber der benachbarten Walze auf ein gewünschtes Maß anwendungsspezifisch und/oder dauerhaft einstellen läßt.

Weitere Merkmale der Erfindung ergeben sich aus den Merkmalen der Unteransprüche sowie den sonstigen Anmeldungsunterlagen.

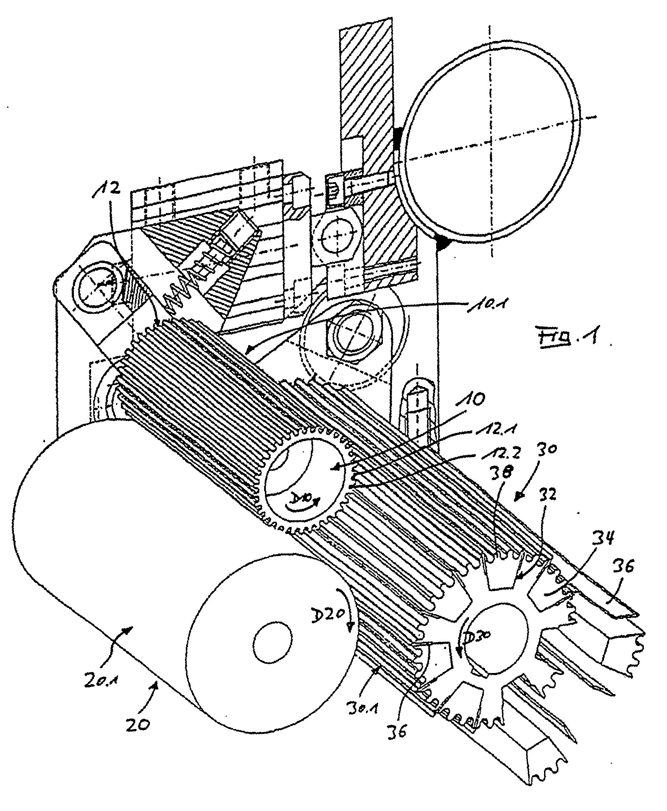

Die Erfindung wird nachstehend anhand eines Ausführungsbeispieles näher erläutert. Dabei zeigen - jeweils in schematisierter Darstellung -
- Figur 1:: eine perspektivische Ansicht einer Schneideinrichtung
- Figur 2:: einen Querschnitt durch einen Beschickungsarm im Bereich der Schneideinrichtung.

In den Figuren sind gleiche und gleichwirkende Bauteile mit gleichen Bezugsziffern dargestellt.

Die Schneideinrichtung umfaßt eine erste Walze 10, die im Bereich ihrer Oberfläche 10.1 mit einer axialen Riffelung 12 ausgebildet ist. Auf diese Weise werden in Axialrichtung der Walze 10 verlaufende Rippen 12.1 und parallel dazu zwischen den Rippen 12.1 verlaufende Täler 12.2 ausgebildet. Hierdurch erhält die Walze 10 eine Bauform nach Art eines Ventilators. Bei Drehung der Walze 10 in Pfeilrichtung D10 wird Luft (Kühlluft) entsprechend in Richtung auf eine dahinter angeordnete dritte Walze, die Schneidwalze 30, gefördert.

Koaxial zur Walze 10 ist neben der ersten Walze 10 eine zweite Walze 20 angeordnet, deren Oberfläche 20.1 einen Belag aus Gummi aufweist. Die Walze 10 rollt mit ihrer Riffelung 12 auf der Oberfläche 20.1 der Walze 20 ab, die entsprechend in Pfeilrichtung D20 rotiert.

Koaxial zur zweiten Walze 20 ist hinter den Walzen 10, 20 die Schneidwalze 30 angeordnet. Die Schneidwalze 30 besitzt ebenfalls eine profilierte Oberfläche, ähnlich der ersten Walze 10. Im Oberflächenbereich der Schneidwalze 30 sind trapezförmige Ausnehmungen 32 zu erkennen, die in Axialrichtung der dritten Walze 30 verlaufen. In diesen Ausnehmungen 32 liegen korrespondierende Walzenstücke 34 ein, deren Oberfläche die Riffelung der benachbarten Abschnitte der Schneidwalze 30 fortsetzen. Die Walzenstücke 34 liegen ortsfest in den Ausnehmungen 32 ein und fixieren gleichzeitig in Axialrichtung der Schneidwalze 30 verlaufende Messer 36, die zwischen korrespondierenden Flanken der Walzenstücke 34 und Ausnehmungen 32 festgelegt sind und die Rippen 38 der dritten Walze 30 überragen.

Die Schneidwalze 30 ist so angeordnet, daß ihre Messer 36 (hier: 14 Messer) die Oberfläche 20.1 der zweiten Walze 20 berühren beziehungsweise auf dieser abrollen.

Auf diese Weise werden Glasfaserstränge, die zunächst zwischen den Walzen 10, 20 hindurchgeführt werden, auf ihrem Weg zwischen den Walzen 20, 30 entsprechend dem Abstand der Messer 36 in korrespondierende Teilstücke geschnitten.

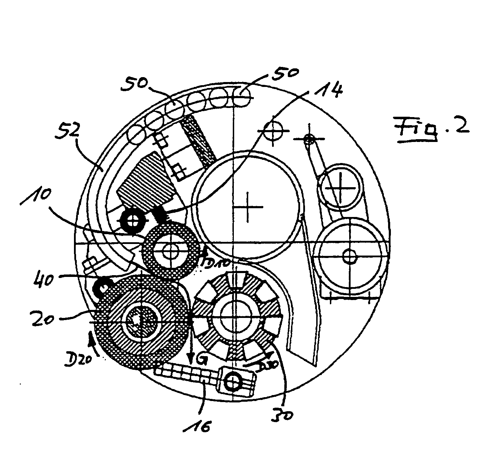

In Figur 2 ist der Weg der Glasfaserstränge (dort mit 40 bezeichnet) schematisch durch den Pfeil G angedeutet.

Figur 2 zeigt auch, daß die in Axialrichtung der Walzen 10, 20, 30 über verschiedene Rohrleitungen 50 antransportierten Glasfaserstränge 40 vor ihrem Weg durch die Schneideinrichtung entlang eines gekrümmten Weges 52 der Rohrleitungen 50 umgelenkt werden.

Figur 2 zeigt auch - in schematisierter Form - eine gefederte Lagerung (Feder 14).der ersten Walze 10 beziehungsweise der zweiten Walze 20 (Zylinder 16).

Insbesondere durch die Profilierung der ersten Walze 10 kommt es gegenüber bekannten Schneideinrichtungen zu einer drastisch erhöhten Zufuhr von Kühlluft in die Schneideinrichtung insgesamt und insbesondere in die Kontaktbereiche der ersten Walze 10 mit der zweiten Walze 20 beziehungsweise der zweiten Walze 20 mit der dritten Walze 30. In entsprechenden Versuchen konnte festgestellt werden, daß aufgrund der beschriebenen Anordnung sich im Betrieb eine Temperaturerhöhung der Walzen auf 3 bis 5 Grad beschränken läßt.

## Patentansprüche

1. Beschickungsarm zur Förderung, Aufbereitung und Ausgabe verschiedener Ausgangsmaterialien (40) zur Herstellung von glasfaserarmierten Kunststoffrohren, mit folgenden Merkmalen:
1.1 einer am ausgabeseitigen Ende angeordneten Schneideinrichtung zum Zerschneiden von Glasfasergarnen (40) auf eine vorgegebene Länge,
1.2 die Schneideinrichtung weist mindestens drei, achsparallel zueinander angeordnete Walzen (10, 20, 30) auf,
1.3 eine erste Walze (10) ist mit einer profilierten Oberfläche (10.1) ausgebildet und so angeordnet, daß sie mit ihrer Oberfläche (10.1) auf einer zweiten, entgegen der ersten Walze (10) umlaufenden Walze (20) abrollt,
1.4 eine dritte Walze (30) weist auf ihrer Oberfläche (30.1) eine Vielzahl beabstandet in Axialrichtung der Walze (30) verlaufende Messer (36) auf und ist so angeordnet, daß sie mit ihrer Oberfläche (30.1) auf der zweiten, entgegen der dritten Walze (30) umlaufenden Walze (20) abrollt.

2. Beschickungsarm nach Anspruch 1, bei dem die zweite Walze (20) der Schneideinrichtung eine reversibel verformbare Oberfläche (20.1) aufweist.

3. Beschickungsarm nach Anspruch 2, bei dem die Oberfläche (20.1) der zweiten Walze (20) aus einem Werkstoff auf Kunststoff- oder Kautschukbasis besteht.

4. Beschickungsarm nach Anspruch 1, bei dem die Oberfläche (10.1) der ersten Walze durch in Axialrichtung verlaufende Rippen (12.1) profiliert ist.

5. Beschickungsarm nach Anspruch 1, bei dem die erste Walze (10) einen kleineren Durchmesser als die zweite und dritte Walze (20, 30) aufweist.

6. Beschickungsarm nach Anspruch 1, bei dem die Messer (36) der dritten Walze (30) auswechselbar im Körper der Walze (30) verankert sind.

7. Beschickungsarm nach Anspruch 1, bei dem die dritte Walze (30) im Bereich zwischen den Messern (36) mit axial verlaufenden Rippen (38) ausgebildet ist.

8. Beschickungsarm nach Anspruch 1, bei dem die erste Walze (10) federnd gelagert ist.

9. Beschickungsarm nach Anspruch 1, bei dem die zweite Walze (20) federnd gelagert ist.

## Claims

1. A feeding arm for the conveyance, preparation and supply of various starting materials (40) for the production of glass fiber reinforced plastic pipes, with the following features:
1.1 a cutting device arranged at the output end for cutting glass fiber yarns (40) to a predetermined length;
1.2 the cutting device is provided with at least three rollers (10, 20, 30) which are arranged axially parallel to one another;
1.3 a first roller (10) is provided with a profiled surface (10.1) and is arranged such that it rolls off with its surface (10.1) on a second roller (20) which revolves in a direction opposite that of the first roller (10);
1.4 a third roller (30) is provided on its surface (30.1) with a plurality of knives (36) extending in a spaced manner in the axial direction of the roller (30) and is arranged such that it rolls off with its surface (30.1) on the second roller (20) which revolves in a direction opposite of the third roller (30).

2. A feeding arm as claimed in claim 1, wherein the second roller (20) of the cutting device is provided with a reversibly deformable surface (20.1).

3. A feeding arm as claimed in claim 2, wherein the surface (20.1) of the second roller (20) is made of a material on the basis of plastic or caoutchouc.

4. A feeding arm as claimed in claim 1, wherein the surface (10.1) of the first roller is profiled by ribs (12.1) extending in the axial direction.

5. A feeding arm as claimed in claim 1, wherein the first roller (10) is provided with a smaller diameter than the second and third roller (20, 30).

6. A feeding arm as claimed in claim 1, wherein the knives (36) of the third roller (30) are exchangeably fastened to the body of the roller (30).

7. A feeding arm as claimed in claim 1, wherein the third roller (30) is arranged with axially extending ribs (38) in the zone between the knives (36).

8. A feeding arm as claimed in claim 1, wherein the first roller (10) is guided resiliently.

9. A feeding arm as claimed in claim 1, wherein the second roller (20) is held resiliently.

## Revendications

1. Bras d'alimentation pour le transport, le traitement et la sortie de différents matériaux de départ (40) pour la fabrication de tuyaux en plastique armés de fibres de verre présentant les caractéristiques suivantes :
1.1 un dispositif de coupe disposé à l'extrémité côté sortie pour le découpage de fils en fibres de verre (40) à une longueur prédéfinie,
1.2 le dispositif de coupe présente au moins trois cylindres (10, 20, 30) disposés parallèlement à l'axe les uns par rapport aux autres,
1.3 un premier cylindre (10) est conçu avec une surface (10.1) profilée et est disposé de telle sorte que sa surface (10.1) se déroule sur un deuxième cylindre (20) tournant dans le sens contraire au premier cylindre (10),
1.4 Un troisième cylindre (30) présente sur sa surface (30.1) une pluralité de couteaux (36) espacés dans le sens axial du cylindre (30) et est disposé de telle sorte que sa surface (30.1) se déroule sur le deuxième cylindre (20) tournant dans le sens contraire au troisième cylindre (30)

2. Bras d'alimentation selon la revendication 1, dans lequel le deuxième cylindre (20) du dispositif de coupe présente une surface (20.1) déformable de façon réversible.

3. Bras d'alimentation selon la revendication 2, dans lequel la surface (20.1) du deuxième cylindre (20) est réalisé dans un matériau à base de plastique ou de caoutchouc.

4. Bras d'alimentation selon la revendication 1, dans lequel la surface (10.1) du premier cylindre est profilée par des nervures (12.1) allant dans le sens axial.

5. Bras d'alimentation selon la revendication 1, dans lequel le premier cylindre (10) présente un diamètre plus petit que les deuxième et troisième cylindres (20, 30).

6. Bras d'alimentation selon la revendication 1, dans lequel les couteaux (36) du troisième cylindre (30) sont ancrés dans le corps du cylindre (30) de façon amovible.

7. Bras d'alimentation selon la revendication 1, dans lequel le troisième cylindre (30) est réalisé dans la zone située entre les couteaux (36) avec des nervures (38) agencées dans le sens axial.

8. Bras d'alimentation selon la revendication 1, dans lequel le premier cylindre (10) est monté de façon élastique.

9. Bras d'alimentation selon la revendication 1, dans lequel le deuxième cylindre (20) est monté de façon élastique.
